# EUROPEAN PATENT APPLICATION

(11) **EP 1 208 742 A2**
(43) Date of publication of application: **29.05.2002**
(21) Application number: 02075593.0
(22) Date of filing: 18.05.1998
(51) Int. Cl.: A01J 5/017

(54) **An implement for automatically milking animals**

(30) Priority: 30.05.1997 NL 1006171
(62) Divisional of application: 98201646.1
(71) Applicant: MAASLAND N.V., 3155 PD Maasland (NL)
(72) Inventor: van der Lely, Cornelis, 6300 Zug (CH)
(74) Representative: Corten, Maurice Jean F.M.

(57) **Abstract**

The invention relates to an implement for automatically milking animals, such as cows, which implement comprises a milk box (1) and a milking robot (7). The implement comprises four teat cups (8; 41) and each of the teat cups (8; 41) is connected with a milk collecting element (26) for temporary collection of the milk yielded by the relevant teat cup (8; 41).

## Description

The invention relates to an implement for automatically milking animals, as described in claim 1.

According to a further inventive feature, the milk collecting elements comprise milk quality sensors, such as conductivity sensors, sensors for determining the fat-protein-content, etc. By means of the milk quality sensors the quality of the milk of each of the udder quarters can be determined. According to a further inventive feature, the milk collecting elements are disposed near the rear side of the milk box.

The invention also relates to an implement for automatically milking animals, such as cows or goats, which implement comprises a milk box and a milking robot, characterized in that the implement comprises animal-following means with the aid of which the position of the animal, or at least a part of the animal, relative to the milk box can be determined, while, on the basis of this position, using a computer, both during and after connection of the teat cups to the teats, the parallelogram constructions are post-controlled in order that the teat cups continue to follow the movements of the animal in the milk box. According to a further inventive feature, the animal-following means comprise mechanical sensors pushing against the flanks of the animal and against the rear side of the animal when the latter is present in the milk box. According to a further inventive feature, when the animal is present in the milk box, one mechanical sensor is located against each flank of the animal and two mechanical sensors are located against its rear side. According to again another inventive feature, the mechanical sensors comprise a hingeable arm construction which is provided at its end with a stop that is rotatably disposed about an axis, which stop rests against the animal when the latter is present in the milk box.

In accordance with a further inventive feature, the animal-following means comprise registration means converting a change in position of the animal-following means into an electronic signal that can be used to post-control the parallelogram constructions. In a preferred embodiment of the invention, the registration means are connected with a hinge axis of the mechanical sensors. According to an aspect of the invention, the registration means may comprise computer-controlled stepper motors. This makes it possible to bring the animal-following means into such a position that, when an animal enters or leaves the milk box, said animal-following means do not form an obstacle for the animal. Furthermore it is possible to push the animal-following means by a predetermined force against the animal when the latter has entered the milk box.

For a better understanding of the invention, reference will now be made to the accompanying drawings, in which:
Figure 1 is a side view of the implement for automatically milking animals, such as cows or goats;
Figure 2 is a plan view of the implement for automatically milking animals shown in Figure 1;
Figure 3 is a rear view of the implement shown in Figures 1 and 2;
Figure 4 shows a detail of the robot arm in a situation in which the robot arm has pivoted into the inoperative position;
Figure 5 is a rear view of a second embodiment of the implement for automatically milking animals, provided with relatively short teat cups enabling to milk small animals, such as sheep or goats, by means of the implement, and
Figure 6 is a rear view of a third embodiment of an implement for automatically milking animals, the teat cup carriers extending obliquely downwards.

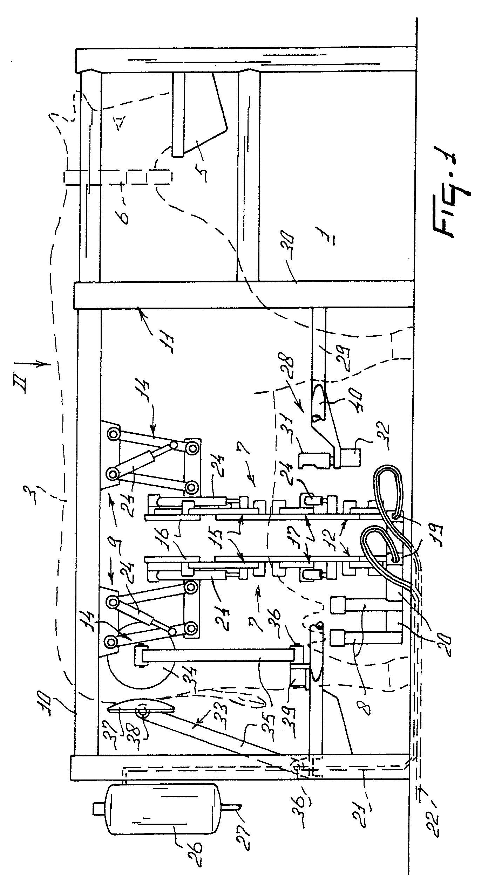

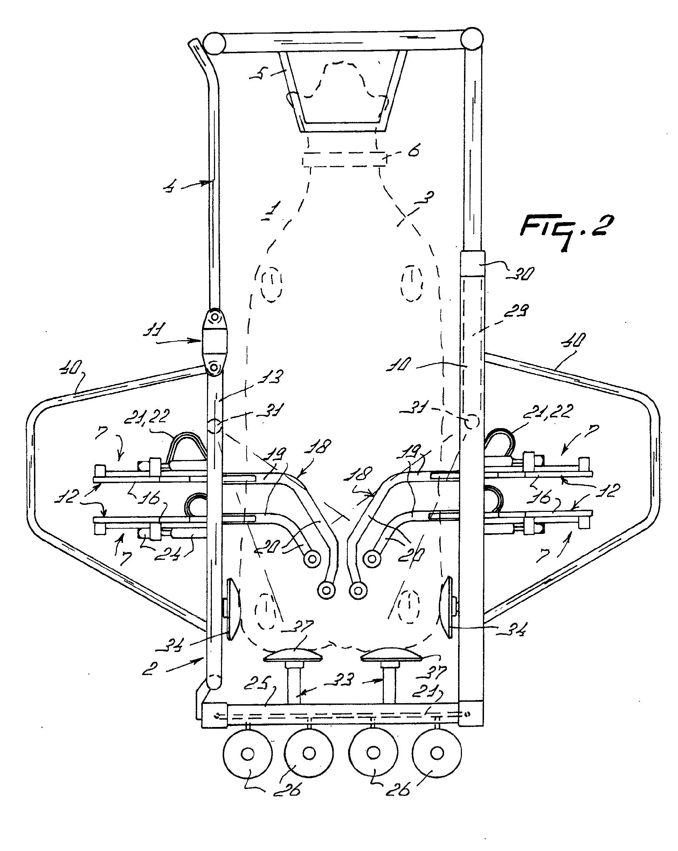

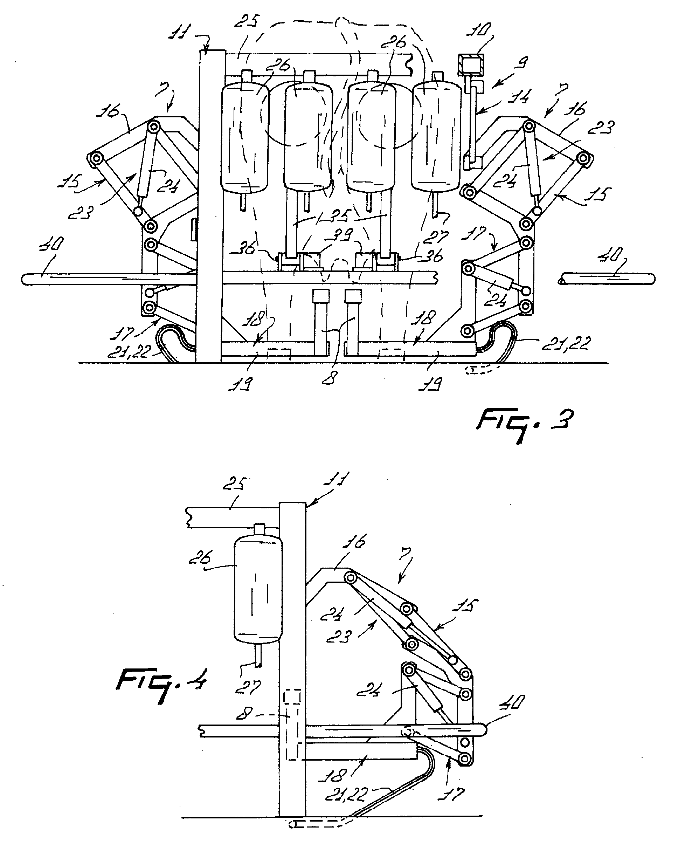

Figure 1 is a side view of a milk box 1, which is provided near one longitudinal side with an entrance door 2, via which the animal 3 can enter the milk box 1, as well as an exit door 4, via which the animal 3 can leave the milk box 1. At the front side of the milk box 1 there is additionally disposed a feed trough 5 in which fodder, such as concentrate, can be supplied to the animal 3 by means of a (non-shown) concentrate metering system. The entrance door 2 and the exit door 4 can be operated automatically by a (non-shown) computer. The animal 3 further wears a collar 6 to which there is fitted a transponder cooperating with a (non-shown) animal identification system and by means of which the animal which is present in the milk box can be identified. The milk box 1 is further provided with a milking robot 7 for automatically connecting teat cups 8 to the teats of the animal 3 to be milked respectively disconnecting same therefrom. The milking robot 7 comprises two robot arms 9 which are fitted near a longitudinal side to an upper beam 10 of a frame 11 of the milk box 1 (Figure 1). The milking robot 7 further comprises two other robot arms 12 which are fitted to an upper beam 13 of the exit door 4. Each of the robot arms 9, 12 comprises a first parallelogram construction 14 which is mounted to the relevant upper beam 10, 13. The first parallelogram construction 14 is located in a plane extending in the longitudinal direction of the milk box 1 (Figure 2). Near the other end than the one to which the first parallelogram construction 14 is fastened to the upper beam 10, 13, a second parallelogram construction 15 is disposed by means of a lug 16 (Figure 3). At the other side than the one where the lug 16 is fitted to the second parallelogram construction 15, a third parallelogram construction 17 is fitted to the second parallelogram construction 15. The second parallelogram construction 15 and the third parallelogram construction 17 are located in a plane enclosing an angle of approximately 90° with the plane in which the first parallelogram construction 14 is located. To the third parallelogram construction 17 there is fitted a teat cup carrier 18 carrying at its end the teat cup 8. The teat cup carrier 18 comprises a first portion 19 which is located in the same plane as the second and third parallelogram constructions 15, 17, and a second portion 20 which is contiguous to the first portion 19 and extends obliquely rearwards and towards the centre of the milk box 1. The first portion 19 and the second portion 20 of the teat cup carrier 18 enclose an angle of approximately 45° with each other (Figure 1). The foremost teat cup carriers 18 additionally comprise a third portion 42 which is contiguous to the second portion 20, which third portion 42 extends in the longitudinal direction of the milk box 1 and passes to beyond the rearmost teat cups 8.

The first, second and third portions 19, 20 and 42 of the teat cup carrier 18 are hollow. In the cavities of the teat cup carrier 18 there are disposed a milk tube 21 and a pulsation tube 22.

The first, second and third parallelogram constructions 14, 15 and 17 are each provided with operating means 23 for controlling said parallelogram constructions. With the aid of the operating means 23 the teat cup carrier 18 can be moved both in a plane in the longitudinal direction of the milk box 1 and in a plane that is approximately perpendicular thereto. In the present embodiment, the operating means 23 comprise servo-pneumatic cylinders 24. These servo-pneumatic cylinders 24 are capable of being activated by means of a computer and always give a feedback signal regarding the position assumed by the piston of the cylinder. In this manner it is always possible to check accurately how the teat cups 8 are positioned relative to the milk box 1. It will be obvious that, in order to obtain the same result, instead of servo-pneumatic cylinders there may also be used servo-hydraulic cylinders or so-called stepper motors. The parallelogram constructions are arranged as shown in the figures.

The robot arms 9 are further provided with overload means which prevent a robot arm 9 from being damaged when the latter is overloaded, e.g. because of the fact that the animal 3 puts a leg on the robot arm 9. In the present embodiment, the overload means comprise one or more (non-shown) adjustable overpressure valves in the pneumatic line of the servo-pneumatic cylinders 24. It is further also possible to apply, instead of an overload valve, pressure sensors which are disposed on both sides of the piston of the cylinder and which, when a specific pressure has been exceeded at one side, supply a signal, whereafter the cylinder is energized in order that the pressure at that side decreases to below the threshold value.

At the rear side of the milk box 1, four milk collecting elements 26 are fitted to a crossbeam 25 of the frame 11. Each of the milk collecting elements 26 comprises near its upper end a connection for the milk tube 21 of a relevant teat cup 8. The milk collecting elements 26 are provided at their lower sides with a discharge line 27 which is in contact with (non-shown) switch means for discharging milk to different storage tanks. In the present embodiment, the milk collecting elements 26 are designed as milk glasses. In the milk collecting elements 26 there are provided (non-shown) milk quality sensors for establishing the milk quality in the relevant milk collecting element 26. The milk quality sensors comprise conductivity sensors as well as sensors for determining the fat and protein content and the germ count of the milk. On the basis of threshold values recorded in the (non-shown) computer, it is possible to determine with the aid of the switch means in which tank the milk of a relevant milk collecting element 26 is stored. In this manner it is possible to determine per udder quarter to which tank the milk yielded is discharged.

The implement is furthermore provided with detectors 28 for determining the position of the teats of an animal to be milked. The detectors 28 are disposed on both longitudinal sides of the milk box 1. One detector 28 is connected with the entrance door 2 of the milk box, the arrangement being such that when the animal 3 enters the milk box 1, this detector does not form an obstacle. The other detector 28 is connected with a stand 30 of the frame 11 by means of a horizontal beam 29. Each of the detectors 28 comprises a laser 31 which is pivoted in a recoprocating manner about an approximately vertical axis by means of a stepper motor 32.

The implement for automatically milking animals further comprises animal-following means 33 with the aid of which the position of the animal 3, or at least a part of the animal 3, relative to the milk box can be determined and, on the basis of this position, using a (non-shown) computer, both during and after connection of the teat cups 8 to the teats of the animal 3 to be milked, the operating means 23 of the robot arms 9 can be post-controlled in order that the teat cups 8, during moving of the animal 3 in the milk box 1, continue to follow the movements of the animal 3. As shown in Figure 1, the animal-following means 33 comprise four mechanical sensors 34 of which one is located against each flank of the animal 3 when the latter is present in the milk box 1 while the two other ones push against its rear side when the animal is present in the milk box 1. As shown in Figure 1, the mechanical sensors 34 comprise a hingeable arm construction 35 whose lower side is connected with the frame 11 of the milk box 1 so as to be hingeable about a horizontal axis 36. At the other end of the hingeable arm construction 35 there is disposed a stop 37 which is pivotable about a further horizontal axis 38. The stop 37 is washer-shaped.

A registration means 39 is connected with the horizontal axis 36 of the hingeable arm construction 35, which registration means 39 establishes the angle rotation of the horizontal axis 36 and converts it into an electronic signal which is supplied to a (non-shown) computer and which can be converted into a control signal for the operating means 23 of the parallelogram constructions. In the present embodiment, the registration means 39 comprise stepper motors. Instead of stepper motors, e.g. potentiometers may be used as well. In the present embodiment, the stepper motor 39 is computer-controlled thus making it possible to pivot the hingeable arm constructions 35 away, so that they do not form an obstacle for the animal when the latter enters the milk box 1. After the animal has entered the milk box 1, which can be established by the animal identification system, the stepper motors 39 are energized, so that the stops 37 will be positioned against the animal by a predetermined and adjustable force. The light pressure exerted on the animal under the influence of the stepper motors 39 ensures that the stops 37 remain in contact with the animal's body, so that each movement of the animal 3 in the milk box 1 can be followed.

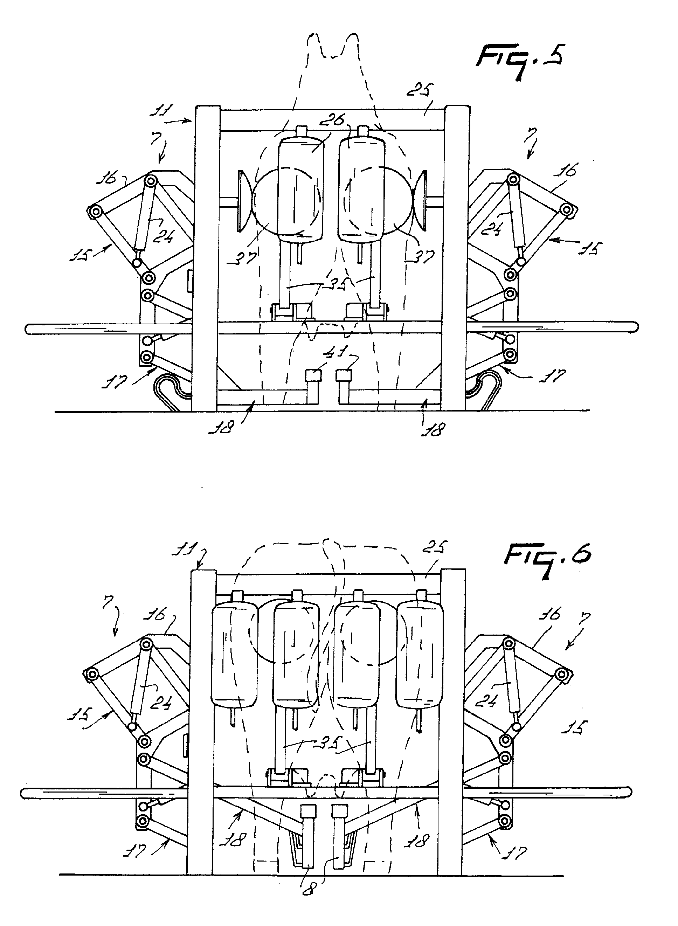

As shown in Figure 2, at both longitudinal sides of the milk box 1 there are disposed U-shaped protective brackets 40 for shielding the robot arms 9 and 12. In their inoperative position, the teat cups 8 can be brought to outside the milk box 1 (Figure 4).

Figure 5 shows a second embodiment according to the invention comprising the same elements as the preceding embodiment but in which the milking robot is particularly suitable for milking small animals, such as sheep and goats, or other animals, such as elks, etc. At the end of the teat cup carriers 18 two relatively short teat cups 41 are disposed. The teat cups 41 have a length of approximately 12 cm. However, it will be obvious that the length of the teat cups depends on the kind of animals to be milked.

Figure 6 shows a third embodiment according to the invention, which also comprises the same elements as the first embodiment, but in which the teat cup carriers 18 are fastened to the third parallelogram construction 17 at an angle of approximately 30° obliquely downwards. Furthermore the teat cups 8 are fitted near their upper ends to the teat cup carriers 18. Due to the fact that the teat cup carriers 18 extend obliquely downwards, at an angle which may also be different from 30°, there is created relatively much freedom on the bottom under the carriers 18, so that it will be more difficult for the animal to kick on or against the teat cup carriers 18.

The implement according to the invention functions as follows and has the following advantages:
In the implement according to the invention the cow has much freedom of movement, because parallelogram constructions are fastened to the milking robot arms and the parallelogram constructions including the teat cups are operated by the control mechanism in such a manner that the teat cups follow the movements of the cow both during connection and during milking of the cow.
The teat cups are connected to the teats by means of the parallelogram construction, more in particular in such a manner that the teat cups remain at the same level during milking.
Consequently, the control of the parallelogram construction is continuously operative during milking, when the animal is forced to stay in the milk box.
When an animal puts a leg on a teat cup and the pressure in the operating cylinders of the parallelogram construction exceeds a specific, possibly adjustable threshold value, an overpressure valve is put into operation causing the parallelogram construction to give way, so that the milking robot arm can be pushed until the bottom without being damaged.
As soon as the cow takes off her leg from the teat cup, the teat cup is reconnected by means of the control mechanism.
In a few seconds the teat cup is moved automatically from the inoperative position into the milking position and more particularly in such a manner that the lower side of the teat cup moves approximately 15 mm above the bottom.
These 15 mm (to 30 mm) can be achieved by recording said data in a computer program.
The desired position of the teat cup can be adjusted with the aid of three parallelogram constructions (or three quadrangular bar mechanisms) moving the teat cup in the longitudinal, transverse and vertical direction of the milk box.
By means of the laser the position of the teats is determined. On the basis of this information, the hingeable constructions are post-controlled so that the teat cups are connected to the teats of an animal to be milked.
With the aid of the cow-following means the movements of the cow in the longitudinal and/or transverse direction of the milk box are registered.
On the basis thereof the teat cups are post-controlled by means of the parallelogram construction.
The operating means of the milking robot are continuously operative both during connection and during milking and disconnection.
When the cow moves during connection of the teat cups and milking, the teat cups follow the cow's movements immediately.
If a cow kicks off a teat cup, the teat cup is moved automatically into the cleaning position for being cleaned, whereafter the teat cup is reconnected to the teat of the animal.
The laser has the advantage that the information regarding the teat position can be collected at a high speed and a great rate.

A further advantage of the implement according to the invention is that the four teat cups can be connected collectively in one movement to the teats of an animal to be milked.

## Claims

1. An implement for automatically milking animals, such as cows, which implement comprises a milk box (1) and a milking robot (7), **characterized in that** the implement comprises four teat cups (8; 41) and that each of the teat cups (8; 41) is connected with a milk collecting element (26) for temporary collection of the milk yielded by the relevant teat cup (8; 41).

2. An implement as claimed in claim 1, **characterized in that** the milk collecting elements (26) comprise milk quality sensors, such as conductivity sensors, sensors for determining the fat-protein-content, etc.

3. An implement as claimed in claim 1 or 2, **characterized in that** the milk collecting elements (26) are disposed near the rear side of the milk box (1).

4. An implement as claimed in any one of the preceding claims, **characterized in that** the robot arms (9) are provided with overload means for the purpose of preventing a robot arm (9) from being damaged when the latter is overloaded, e.g. because of the fact that an animal puts a leg on the robot arm (9) .

5. An implement as claimed in claim 4, **characterized in that** the overload means comprise an adjustable overpressure valve which is included in the hydraulic or pneumatic circuit of the operating means (23).

6. An implement for automatically milking animals, such as cows, which implement comprises a milk box (1) and a milking robot (7), **characterized in that** the implement comprises animal-following means (33) with the aid of which the position of the animal (3), or at least a part of the animal (3), relative to the milk box can be determined while, on the basis of this position, using a computer, both during and after connection of the teat cups (8; 41) to the teats, the hingeable constructions, such as quadrangular hingeable constructions or parallelogram constructions (14; 15; 17) are post-controlled in order that the teat cups (8; 41) continue to follow the movements of the animal (3) in the milk box (1).

7. An implement as claimed in claim 6, **characterized in that** the animal-following means (33) comprise mechanical sensors (34) pushing against the flanks of the animal (3) and against the rear side of the animal (3) when the latter is present in the milk box (1).

8. An implement as claimed in claim 7, **characterized in that**, when the animal (3) is present in the milk box (1), one mechanical sensor (34) is located at each flank of the animal (3) and two mechanical sensors (34) are located against its rear side.

9. An implement as claimed in claim 7 or 8, **characterized in that** the mechanical sensors (34) comprise a hingeable arm construction (35) which is provided at its end with a stop (37) that is rotatably disposed about an axis (38), which stop (37) rests against the animal (3) when the latter is present in the milk box (1).

10. An implement as claimed in any one of claims 6 to 9, **characterized in that** the animal-following means (33) comprise registration means (39) converting a change in position of the animal-following means (33) into an electronic signal that can be used to post-control the hingeable constructions (14; 15; 17).

11. An implement as claimed in claim 10, **characterized in that** the registration means (39) are connected with a hinge axis (36) of the mechanical sensors (34).

12. An implement as claimed in claim 10 or 11, **characterized in that** the registration means (39) comprise a stepper motor (39).

13. An implement as claimed in claim 12, **characterized in that** the stepper motor (39) is computer-controlled.

14. An implement as claimed in any one of claims 6 to 13, **characterized in that** the implement comprises four teat cups (8; 41) and that each of the teat cups (8; 41) is connected with a milk collecting element (26) for temporary collection of the milk yielded by the relevant teat cup (8; 41).
